# EUROPÄISCHE PATENTSCHRIFT

(11) **EP 1 929 741 B1**
(45) Veröffentlichungstag und Bekanntmachung des Hinweises auf die Patenterteilung: **05.08.2009**
(21) Anmeldenummer: 06778342.3
(22) Anmeldetag: 24.08.2006
(51) Int. Cl.: H04L 29/06, H04L 12/28

(54) **ZUGANGSELEMENT UND VERFAHREN ZUR ZUGANGSKONTROLLE EINES NETZELEMENTS**
ACCESS ELEMENT AND METHOD FOR CONTROLLING ACCESS OF A NETWORK ELEMENT
ELEMENT D'ACCES ET PROCEDE POUR CONTROLER L'ACCES D'UN ELEMENT DE RESEAU

(30) Priorität: 29.09.2005 DE 102005046742
(43) Veröffentlichungstag der Anmeldung: 11.06.2008
(73) Patentinhaber: Siemens Enterprise Communications GmbH & Co. KG, 81379 München (DE)
(72) Erfinder: VEITS, Oliver, 85221 Dachau (DE)
(74) Vertreter: Fritzsche, Thomas
(86) Internationale Anmeldenummer: PCT/EP2006/065620
(87) Internationale Veröffentlichungsnummer: WO 2007/036402

(56) Entgegenhaltungen:
- EP-A- 1 458 151
- WO-A-01/74026
- US-A1- 2005 152 305
- "IEEE Standard for Local and metropolitan area networks - Port-based Network Access Control" IEEE STD 802.1X-2001, 14. Juni 2001 (2001-06-14), Seiten I-134, XP002270244 in der Anmeldung erwähnt

## Beschreibung

Die Erfindung betrifft ein Zugangselement und ein Verfahren zur Zugangskontrolle einer Mehrzahl von Netzelementen an einem Anschluss des Zugangselements.

Im Stand der Technik sind Verfahren zur Zugangskontrolle eines Netzelements an einem paketorientierten Netzwerk bzw. Datennetz bekannt. Ein Netzelement erhält Zugang zu einem Datennetz, indem dessen Identifizierungs- und Authentifizierungsinformationen über ein Zugangselement an einen Authentifizierungsserver übermittelt werden. Der Authentifizierungsserver überprüft die Informationen des Netzelements und entscheidet über einen Zugang des Netzelements. Im Fall einer positiven Entscheidung erfolgt der Zugang des Netzelements über einen freigegebenen Anschluss des Zugangselements. Das Zugangselement ist üblicherweise als Switch oder allgemeiner als Access Point ausgestaltet.

Ein solches Verfahren ist z.B. in der Drucksckrift US 2005/152 305 offenbart.

Im Folgenden wird eine Zugangskontrolle eines ersten Netzelements betrachtet, mit dem ein zweites Netzelement, beispielsweise über einen im ersten Netzelement angeordneten, internen Switch verbunden ist. Die beiden Netzelemente sind z.B. in Serie geschaltet mit einem Anschluss des Zugangselements verbunden. Eine Zugangskontrolle erfolgt für einen jeweiligen Anschluss bzw. »Port« des Zugangselements und wird daher auch als »portbezogen« bezeichnet.

Bei einer solchen Anordnung tritt folgendes Problem ein. Nach einer erfolgreichen Authentifizierung eines der Netzelemente wird der Zugang für alle mit dem Port des Zugangselements verbundenen Netzelemente freigegeben. Eine solche Freigabe erfolgt beispielsweise nach einer Authentifizierung des zweiten Netzelements, für das erste und das zweite Netzelement, ohne dass eine Identifizierung oder Authentifizierung des ersten Netzelements in Betracht gezogen bzw. angefordert wird. Damit ist eine am Zugangselement vorgesehene Zugangskontrolle für das erste Netzelement unwirksam geworden.

Aufgabe der Erfindung ist es, eine verbesserte Zugangskontrolle einer Mehrzahl von mit einem Anschluss eines Zugangselements verbundenen Netzelementen zu gewährleisten.

Eine Lösung der Aufgabe erfolgt hinsichtlich ihres Verfahrensaspekts durch ein Verfahren mit den Merkmalen des Patentanspruchs 1 und hinsichtlich ihres Vorrichtungsaspekts durch ein Netzelement mit den Merkmalen des Patentanspruchs 7.

Dabei wird in einem paketorientierten Netzwerk von einem Anschluss eines Zugangselements - z.B. ein Switch oder Access Point - ausgegangen, an dem mindestens ein zweites Netzelement über ein erstes Netzelement mit dem Zugangselement verbunden ist. Das zweite Netzelement ist beispielsweise in Serie mit dem ersten Netzelement und schließlich mit dem Anschluss bzw. Port des Zugangselements verbunden. Das erste Netzelement sei am Zugangselement bereits authentifiziert bzw. angemeldet. Das erfindungsgemäße Verfahren zur Zugangskontrolle sieht dabei zunächst eine Initiierung eines erneuten Authentifizierungsvorgangs des ersten Netzelements am Zugangselement vor. Der Authentifizierungsvorgang wird durch das erste Netzelement initiiert. Das erste Netzelement leitet dann eine vom Zugangselement gesendete und am ersten Netzelement eintreffende Authentifizierungsanforderung an das zweite Netzelement weiter. Die Beantwortung der Authentifizierungsanforderung mit einer Antwortnachricht erfolgt dann durch das zweite Netzelement wobei die der Antwortnachricht über das erste Netzelement an das Zugangselement weitergeleitet wird.

Mit den erfindungsgemäßen Verfahren wird also eine erneute Authentifizierungsanforderung des Zugangselements für das erste Netzelement herbeigeführt, welche dann erfindungsgemäß an das zweite Netzelement weitergereicht wird. Auf diese Weise wird in vorteilhafter Weise eine Authentifizierung des zweiten Netzelements erzwungen. Eine solche Authentifizierung war im Stand der Technik - in nachteiliger Weise für die Netzwerksicherheit - für das zweite Netzelement bislang nicht gefordert, sofern das am gleichen Port angeschlossene sich das erste Netzelement bereits gültig authentifiziert hat und eine Freigabe am Zugangselement erhalten hat.

Ein weiterer Vorteil des erfindungsgemäßen Verfahrens und der zugehörigen Vorrichtung ist darin zu sehen, dass eine Verwirklichung lediglich eine vergleichsweise einfache Modifikation in der Steuerlogik des ersten Netzelements erfordert. Insbesondere ist keinerlei Modifikation des Zugangselements oder eines Authentifizierungsservers erforderlich.

Vorteilhafte Weiterbildungen der Erfindung sind in den Unteransprüchen angegeben.

Eine besonders vorteilhafte Weiterbildung der Erfindung sieht zwei weitere Verfahrensschritte vor, die einen Empfang und Auswertung einer vom Zugangselement auf die Antwortnachricht gesendeten Bestätigungsnachricht durch das erste Netzelement vorsehen und in Abhängigkeit dieser Auswertung
- also Freigabe oder Verweigerung des Zugangs am Zugangselement für das zweite Netzelement - eine Freigabe oder Sperrung eines Zugangs des zweiten Netzelements durch das erste Netzelement vorsehen. Der erfinderische Grundgedanke wird hier also in vorteilhafter Weise mit dem Kerngedanken weitergebildet, dass das erste Netzelement gegenüber dem zweiten Netzelement seinerseits funktionell als »Zugangselement« agiert, indem die weitergeleitete Bestätigungsnachricht ausgewertet wird und dann am ersten Netzelement eine Freigabe oder Sperrung veranlasst wird.

Eine Ausführungsvariante für die Initiierung eines erneuten Authentifizierungsvorgangs des ersten Netzelements am Zugangselement durch das erste Netzelement besteht darin, dass sich das erste Netzelement durch eine entsprechende Meldung oder durch andere Maßnahmen am Zugangselement abmeldet. Diese Ausführungsvariante hat den Vorteil einer einfachen softwaretechnischen Verwirklichung.

In einer vorteilhaften Weiterbildung der Erfindung ist eine erneute Anmeldung des ersten Netzelements für den vorgenannten Fall vorgesehen, dass die Initiierung eines erneuten Authentifizierungsvorgangs durch eine Abmeldung des ersten Netzelements herbeigeführt wurde. Gegenüber dem eigentlichen Zugangselement behält das erste Netzelement also seine funktionelle Rolle als zugangskontrolliertes Netzelement, während es gegenüber dem zweiten Netzelement funktionell als »Zugangselement« agiert.

Eine alternative Ausführungsvariante für die Initiierung eines erneuten Authentifizierungsvorgangs des ersten Netzelements am Zugangselement durch das erste Netzelement besteht darin, dass das erste Netzelement eine Aufforderung an das Zugangselement sendet, eine erneute Authentisierung durchzuführen. Der Vorteil dieser Variante liegt insbesondere darin, dass das erste Netzelement nicht durch Abmeldung und erneute Anmeldung vorübergehend außer Betrieb ist.

Ein Ausführungsbeispiel mit weiteren Vorteilen und Ausgestaltungen der Erfindung wird im folgenden anhand der Zeichnung näher erläutert.

### Dabei zeigen:

- Fig. 1:: ein Strukturbild zur schematischen Darstellung zweier in Serie geschalteter Netzelemente an einem Zugangselement; und
- Fig. 2:: ein Strukturbild zur schematischen Darstellung eines zeitlichen Ablaufs von steuernden Nachrichten im Zusammenhang mit einer Zugangskontrolle.

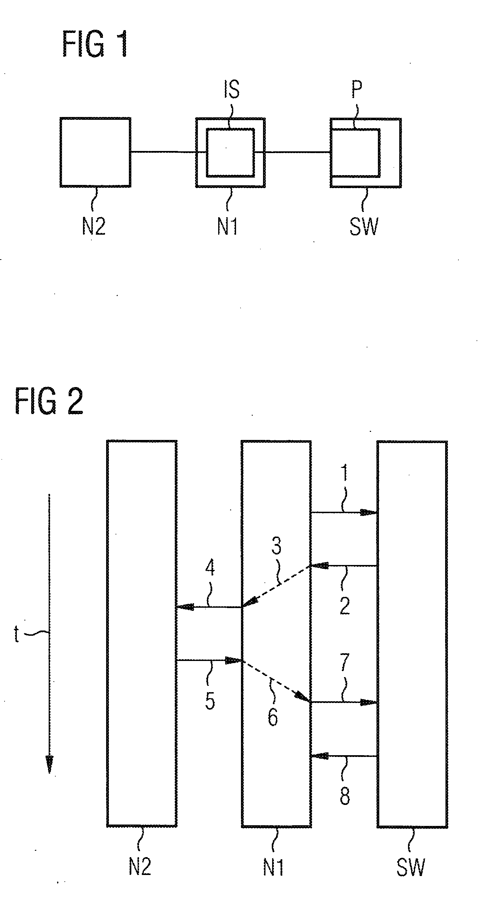

In Fig. 1 ist ein Zugangselement SW mit einem verbundenen ersten Netzelement N1 dargestellt, mit dem wiederum ein zweites Netzelement N2 verbunden ist. Die Verbindung des ersten Netzelements N1 mit dem Zugangselement SW erfolgt über einen Anschluss P (»Port«). Das erste Netzelement N1 weist einen internen Switch IS auf, welcher sowohl eine datentechnische Verbindung des ersten Netzelements N1 als auch des zweiten Netzelements N2 mit dem Zugangselement gewährleistet. Der interne Switch ist beispielsweise als 3-Port-Switch ausgeführt. Eine solche Anordnung wird oftmals gewählt, um eine aufwändige Kabelführung an einem Arbeitsplatz zu vermeiden.

Ein Ausführungsbeispiel für eine solche Anordnung ist ein paketorientiert arbeitendes Kommunikationsendgerät, z.B. ein VoIP-Telefon (Voice over Internet Protocol), das als erstes Netzelement an ein paketorientierte Datennetz angeschlossen ist und einen weiteren solchen Anschluss für ein zweites Netzelement, beispielsweise einen PC (Personal Computer) vorhält, welcher vorteilhaft in der Nähe des Telefons an das Datennetzwerk angeschlossen werden kann.

Ein verbreitetes Verfahren zur netzwerkbasierten Zugangskontrolle ist aus dem IEEE-Standard 802.1x bekannt. Der Standard 802.1x beschreibt ein Verfahren zur Authentifizierung und Autorisierung in Datennetzwerken. Dabei wird ein Netzwerkzugang definiert, welcher einem physikalischen Anschluss bzw. »Port« in einem lokalen Netzwerk (Local Area Network, LAN) oder einem logischen Port gemäß der Spezifikationen für ein »Wireless LAN« bzw. WLAN im bekannten Standard IEEE 802.11 entspricht. An diesem Netzwerkzugang erfolgt die Authentifizierung durch ein Zugangselement bzw. »Authenticator«, welches in Zusammenarbeit mit dem Authentifizierungsserver die durch das als »Supplicant« agierende Netzelement übermittelten Authentifizierungsinformationen prüft und gegebenenfalls den Zugriff auf den durch den Authenticator angebotenen Netzzugang zulässt oder abweist. Das Zugangselement SW kann dabei in beliebiger Weise, z.B. als Switch, Access Point oder auch als Netzelement mit einem internen Switch ausgestaltet sein.

Im Zusammenhang mit 802.1x wird häufig das EAP (Extensible Authentication Protocol) gemäß RFC 2284 (Request for Comment) der IETF (Internet Engineering Task Force) eingesetzt. Dabei werden EAP-Nachrichten in 802.1x-Nachrichten verpackt.

An einer portbezogenen Authentifizierung sind drei Elemente beteiligt:
- ein Netzelement, das sich als Supplicant im Datennetz authentifizieren soll,
- der Authentifizierer oder auch Authenticator im Zugangselement, welcher den Authentifizierungsvorgang mit dem Netzelement durchführt, und
- der Authentifizierungsserver (Authentication Server), der dem Authentifizierer die zur Authentifizierung erforderlichen Informationen zur Verfügung stellt.

Der Standard IEEE 802.1X sieht vor, dass einem physischen Anschluss zwei logische Anschlüsse (Ports) zugeordnet werden. Der physische Anschluss leitet die empfangenen Pakete grundsätzlich an den so genannten freien Port (Uncontrolled Port) weiter. Der kontrollierte Port (Controlled Port) kann nur nach einer Authentifizierung erreicht werden, die über den freien Port erfolgen kann.

Der - nicht dargestellte - Authentifizierungsserver ist beispielsweise gemäß der bekannten RADIUS-Serverprotokolle (Remote Authentication Dial-In User Service) ausgestaltet. RADIUS ist ein Client-Server-Protokoll, das zur Authentifizierung von Benutzern bei Einwahlverbindungen in ein Computernetzwerk dient. Dieses Protokoll wird unter anderem für eine zentrale Authentifizierung von Einwahlverbindungen über Modem, ISDN, VPN oder Wireless LAN verwendet. Ein zugehöriger Server-Dienst, der RADIUS-Server, dient der Authentifizierung von Netzelementen unter Verwendung von Datenbanken, in denen die Identifizierungsinformation der jeweiligen Netzelement, z.B. eine MAC-Adresse des Netzelements (Media Access Control) und Authentifizierungsinformationen, z.B. ein Passwort, gespeichert sind.

Einige Authentifizierungsserver werden aufgrund erweiterter Aufgaben oftmals auch als AAA-Server (Authentication, Authorization, Accounting) bezeichnet.

Fig. 2 zeigt unter weiterer Bezugnahme auf die Funktionseinheiten der Fig. 1 einen zeitlichen Ablaufs steuernder Nachrichten im Zusammenhang mit einer Zugangskontrolle.

Der zeitliche Ablauf wird dabei durch Einschalten bzw. Aktivierung des zweiten Netzelements N2, beispielsweise ein Personal Computer N2 angestoßen.

Die nachfolgenden mit einem Austausch von Nachrichten einhergehenden Verfahrensschritte sind in der Zeichnung mit Pfeilen und einem zugehörigen numerischen Bezugszeichen dargestellt. Mit Bezugnahme auf diese Bezugszeichen läuft das Verfahren dabei wie folgt ab:
1 Das erste Netzelement N1 initiiert einen neuen Authentisierungsvorgang. Dieser Vorgang wird beispielsweise durch eine Übermittlung einer »EAPOL-START« ausgelöst, welche das Zugangselement SW (Authenticator) anweist, eine Authentisierung durchzuführen. Gemäß einer im folgenden weiter betrachteten zweiten Ausführungsvariante meldet sich das erste Netzelement N1 mit einer ersten Steuernachricht 1 vom Zugangselement SW ab. Vorteilig simuliert das erste Netzelement N1 eine Situation, bei der das Netzwerkkabel gelöst und wieder angesteckt wird, um dem Zugangselement SW anzuzeigen, dass eine erneute Authentifizierung erforderlich ist. Die erste Steuernachricht ist vorzugsweise als EAP-Meldung 1 (Extensible Authentication Protocol) ausgestaltet.
2 mit einer vom Zugangselement SW das erste Netzelement N1 gesendeten Authentifizierungsanforderung 2 wird das abgemeldete erste Netzelement N1 aufgefordert, sich (erneut) zu authentifizieren.
3 Die Authentifizierungsanforderung 2 wird innerhalb des ersten Netzelements N1 an den für das zweite Netzelement N2 vorgesehenen Port weitergeleitet. Die Weiterleitung 3 ist in der Zeichnung gestrichelt dargestellt.
4 Die weitergeleitete Authentifizierungsanforderung 4 trifft am zweiten Netzelement N2 ein. Sie entspricht im wesentlichen der am ersten Netzelement N1 erhaltenen Authentifizierungsanforderung 2.
5 Das zweite Netzelement N2 beantwortet die Authentifizierungsanforderung 4 mit einer eigene Identifizierungs-und Authentifizierungsinformationen enthaltenden Antwortnachricht 5.
6 Die Antwortnachricht 5 wird innerhalb des ersten Netzelements N1 an den für das Zugangselement SW vorgesehenen Port weitergeleitet. Die Weiterleitung 6 ist in der Zeichnung gestrichelt dargestellt.
7 Die weitergeleitete Antwortnachricht 7 trifft am Zugangselement SW ein. Sie entspricht im wesentlichen der am zweiten Netzelement N2 gesendeten Antwortnachricht 5.
8 Eine vom Zugangselement SW an das erste Netzelement gesendete Bestätigungsnachricht 8 enthält Informationen, ob eine Freigabe gewährt oder abgelehnt wird.

Die Bestätigungsnachricht 8 wird am ersten Netzelement N1 ausgewertet.

Falls der Zugang anhand von in der Bestätigungsnachricht 8 enthaltenen Informationen vom Zugangselement SW gewährt wurde, die Authentifizierung des zweiten Netzelements N2 also erfolgreich war, lässt das Netzelement N1 in Folge einen Datenverkehr zwischen dem zweiten Netzelement N2 über das erste Netzelement N1 mit dem Zugangselement SW zu.

Falls der Zugang anhand von in der Bestätigungsnachricht 8 enthaltenen Informationen vom Zugangselement SW abgelehnt wurde, die Authentifizierung des zweiten Netzelements N2 also fehlschlug, sperrt das Netzelement N1 in Folge jeglichen Datenverkehr mit dem zweiten Netzelement N2, eventuell mit Ausnahme weiterer 802.1x Meldungen, welche z.B. für einen erneuten Authentisierungsversuch weitergereicht werden.

Das erste Netzelement N1 meldet sich in vorteilhafter Weise nach der Ablehnung eines Zugangs für das zweite Netzelement

### N2 wieder mit seinen eigenen Identifizierungs- und Authentifizierungsinformationen an.

Bei einer Ausgestaltung des ersten Netzelements N1 als Kommunikationsendgerät bzw. Telefon ist diese erneute Anmeldung geboten, um im Falle eines verweigerten Zugangs eines daran angeschlossenen Personal Computers N2 zumindest das berechtigte Telefon N1 wieder in Betrieb zu nehmen.

Insbesondere bei einer Ausgestaltung des ersten Netzelements N1 als Telefon zeigen sich die Vorteile der erfindungsgemäßen Mitteln gegenüber gedachte Alternativlösungen zur Lösung der erfindungsgemäßen Aufgabe. Eine eher nachteilige Alternativlösung abseits von der erfindungsgemäßen Idee könnte vorsehen, im ersten Netzelement N1 sowohl einen Supplicant als auch einen Authenticator zu verwirklichen. In Richtung des Zugangselements verhielte sich das erste Netzelement N1 dann als Supplicant und gegenüber dem zweiten Netzelement N2 als Authenticator. Bei letzterer Rolle müsste das erste Netzelement mit dem - nicht dargestellten - Authentifizierungsserver kommunizieren. Diese Alternativlösung ist insbesondere deswegen nachteilig, da dann auch die Protokolle zur Kommunikation mit dem »Backend«, also im wesentlichen dem Authentifizierungsserver implementiert werden müssten. Bei einem Telefon führt das zu höherem Entwicklungsaufwand und zu einer Verteuerung der Geräte, da mehr Speicherressourcen bereitgestellt werden müssen.

Eine andere Alternativlösung zur Lösung der erfindungsgemäßen Aufgabe beträfe eine Verwendung von Switches SW, welche eine Authentifizierung mehrer Netzelemente an ein und demselben Port P des Switches SW leisten. Ein Einsatz von solchen Switches SW ist jedoch in heutigen Netzwerken nicht allgemein gewährleistet, so dass das erfindungsgemäße Verfahren hier vorteilhafter ist, da es keinen speziell ausgestalteten Switch bzw. Zugangselement SW voraussetzt.

Mit den erfindungsgemäßen Mitteln ist es hingegen möglich, auch bei 802.1x-standardkonformen Ethernet Switches SW sicherzustellen, dass ein Personal Computer N2 keinen Zugang zum Datennetz ohne Authentifizierung erhält und gleichzeitig den Implementierungsaufwand des verbindenden VoIP-Telefons N1 in Grenzen zu halten.

Mit der erfindungsgemäß vorgesehenen unveränderten Weiterleitung von für den Authentifizierungsprozess vorgesehenen EAP-Nachrichten über das erste Netzelement N1 agiert das erste Netzelement N1 als »Relay«.

Das erfindungsgemäße Verfahren muss nicht unbedingt ausschließlich im ersten Netzelement N1 implementiert sein. Alternative Ausführungsformen umfassen eine Verteilung auf einzelne im Netzwerk verteilte Komponenten. Auch die Verwendung des Protokolls IEEE 802.1x zur Zugangssteuerung ist aufgrund der weiten Verbreitung vorteilhaft, jedoch nicht zwingend.

Die Erfindung wurde voranstehend an einem Ausführungsbeispiels beschrieben.

## Patentansprüche

1. Verfahren zur Zugangskontrolle einer Mehrzahl von an einem Anschluss eines Zugangselements (SW) verbundenen Netzelementen, wobei mindestens ein zweites Netzelement (N2) über ein erstes Netzelement (N1) mit dem Zugangselement (SW) verbunden ist und wobei das erste Netzelement (N1) am Zugangselement authentifiziert ist, umfassend folgende Verfahrensschritte:
a) Initiierung (1) eines erneuten Authentifizierungsvorgangs des ersten Netzelements (N1) am Zugangselement (SW) durch das erste Netzelement (N1)
b) Weiterleitung (3,4) einer im Zuge des erneuten Authentifizierungsvorgangs des ersten Netzelements (N1) vom Zugangselement (SW) gesendeten und am ersten Netzelement (N1) erhaltenen Authentifizierungsanforderung (2) an das zweite Netzelement (N2)
c) Beantwortung der Authentifizierungsanforderung (2) mit einer Antwortnachricht (5) durch das zweite Netzelement (N2) und Weiterleitung (6,7) der Antwortnachricht (5) über das erste Netzelement (N1) an das Zugangselement (SW).

2. Verfahren nach Anspruch 1,
**gekennzeichnet durch** die Verfahrensschritte:
d) Empfang und Auswertung einer vom Zugangselement (SW) gesendeten Bestätigungsnachricht (8) **durch** das erste Netzelement (N1)
e) Freigabe oder Sperrung eines Zugangs des zweiten Netzelements (N2) am Zugangselement **durch** das erste Netzelement (N1) in Abhängigkeit der Auswertung von Schritt d).

3. Verfahren nach Anspruch 2,
**dadurch gekennzeichnet, dass** die Initiierung (1) eines erneuten Authentifizierungsvorgangs durch eine Abmeldung des ersten Netzelements (N1) erfolgt.

4. Verfahren nach Anspruch 3,
**dadurch gekennzeichnet,**
**dass** im Fall einer Sperrung des Zugangs für das zweite Netzelement (N2) das erste Netzelement (N1) sich wieder am Zugangselement (SW) anmeldet.

5. Verfahren nach Anspruch 2,
**dadurch gekennzeichnet,**
**dass** die Initiierung (1) des erneuten Authentifizierungs-vorgangs durch Übermittlung einer steuernachricht zum Abmelden des ersten Netzelements (N1) vom Zugriffselement (SW), um eine erneute Authentisierung durchzuführen, erfolgt.

6. Verfahren nach einem der vorgenannten Ansprüche,
dass Nachrichtenaustausch und Nachrichtenstruktur in Anwendung des Authentifizierungsprotokolls IEEE 802.1x erfolgt.

7. Erstes Netzelement (N1) zum Anschluss an ein Zugangselement (SW) und zum Anschluss eines zweiten Netzelements (N2) am Zugangselement (SW) mit Mitteln zur Durchführung des Verfahrens nach einem der Ansprüche 1 bis 6.

8. Erstes Netzelement (N1) nach Anspruch 7,
**gekennzeichnet durch,** eine Ausgestaltung als paketorientiertes Kommunikationsendgerät.

9. Erstes Netzelement (N1) nach einem der Ansprüche 7 oder 8, beinhaltend einen netzelement-internen Switch (IS).

## Claims

1. Method for controlling access of a plurality of network elements that are connected to a connection of an access element (SW), wherein at least one second network element (N2) is connected to the access element (SW) by means of a first network element (N1) and wherein the first network element (N1) is authenticated at the access element, said method comprising the following method steps;
a) the first network element (N1) initiates (1) another procedure authenticating the first network element (N1) at the access element (SW),
b) an authentication request (2) transmitted by the access element (SW) in the course of the other procedure authenticating the first network element (N1) and received at the first network element (N1) is forwarded (3, 4) to the second network element (N2),
c) the second network element (N2) responds to the authentication request (2) with a response message (5) and the response message (5) is forwarded (6, 7) to the access element (SW) via the first network element (N1).

2. Method according to Claim 1, **characterized by** the method steps:
d) the first network element (N1) receives and evaluates an acknowledgement message (8) transmitted by the access element (SW),
e) the first network element (N1) releases or blocks an access of the second network element (N2) at the access element in dependence on the evaluation of step d).

3. Method according to Claim 2, **characterized in that** the initiating (1) of another authentication procedure is effected by a logging off of the first network element (N1).

4. Method according to Claim 3, **characterized in that** in the event of the access for the second network element (N2) being blocked, the first network element (N1) logs on again at the access element (SW).

5. Method according to Claim 2, **characterized in that** the initiating (1) of the other authentication procedure is effected by transmitting a control message at the logging off of the first network element (N1) by the access element (SW) in order to execute a new authentication.

6. Method according to one of the preceding Claims, wherein message exchange and message structure are effected by using the authentication protocol IEEE 802.1 x.

7. First network element (N1) for the connection to an access element (SW) and for the connection of a second network element (N2) at the access element (SW) with means for accomplishing the method according to one of Claims 1 to 6.

8. First network element (N1) according to Claim 7, **characterized by** a development as a packet-orientated communications terminal.

9. First network element (N1) according to one of Claims 7 or 8, including a switch (IS) internal to the network element.

## Revendications

1. Procédé de contrôle d'accès d'une pluralité d'éléments de réseau reliés à une connexion d'un élément d'accès (SW), dans lequel au moins un deuxième élément de réseau (N2) est relié à l'élément d'accès (SW) au moyen d'un premier élément de réseau (N1), et dans lequel le premier élément de réseau (N1) est authentifié au niveau de l'élément d'accès (SW), le procédé comprenant les étapes consistant à :
a) déclencher (1) un processus d'authentification renouvelée du premier élément de réseau (N1) au niveau de l'élément d'accès (SW) par le premier élément de réseau (N1) ;
b) retransmettre (3, 4) au deuxième élément de réseau (N2) une requête d'authentification (2) envoyée par l'élément d'accès (SW) au cours du processus d'authentification renouvelée du premier élément de réseau (N1) et reçue au niveau du premier l'élément de réseau (N1);
c) répondre à la requête d'authentification (2) par un message de réponse (5) à travers le deuxième élément de réseau (N2) et retransmettre (6, 7) le message de réponse (5) au moyen du premier élément de réseau (N1) à l'élément d'accès (SW).

2. Procédé selon la revendication 1,
**caractérisé par** les étapes consistant à :
d) recevoir et évaluer un message de confirmation (8) envoyé par l'élément d'accès (SW) par le premier élément de réseau (N1) ;
e) débloquer ou bloquer un accès du deuxième élément de réseau (N2) au niveau de l'élément d'accès par le premier élément de réseau (N1) en fonction de l'évaluation effectuée à l'étape d).

3. Procédé selon la revendication 2,
**caractérisé en ce que** le déclenchement (1) d'un processus d'authentification renouvelée passe par une déconnexion du premier élément de réseau (N1).

4. Procédé selon la revendication 3,
**caractérisé en ce qu'**en cas de blocage de l'accès pour le deuxième élément de réseau (N2), le premier élément de réseau (N1) se reconnecte à l'élément d'accès (SW).

5. Procédé selon la revendication 2,
**caractérisé en ce que** le déclenchement (1) du processus d'authentification renouvelée s'effectue par la transmission d'un message de commande pour déconnecter le premier élément de réseau (N1) de l'élément d'accès (SW) afin d'exécuter une authentification renouvelée.

6. Procédé selon l'une quelconque des revendications précédentes,
**caractérisé en ce que** l'échange de messages et la structure de message sont réalisés en application du protocole d'authentification IEEE 802.1 x.

7. Premier élément de réseau (N1) pour se connecter à un élément d'accès (SW) et pour connecter à un deuxième élément de réseau (N2) à l'élément d'accès (SW) avec des moyens pour exécuter le procédé selon l'une quelconque des revendications 1 à 6.

8. Premier élément de réseau (N1) selon la revendication 7,
**caractérisé par** une configuration en tant que terminal de communication orienté paquets.

9. Premier élément de réseau (N1) selon l'une quelconque des revendications 7 ou 8, comprenant un commutateur (IS) interne à l'élément de réseau.
